**Europäisches Patentamt**

**European Patent Office**

**Office européen des brevets**

(19)

(11) Publication number: **0 060 098**
**A2**

# EUROPEAN PATENT APPLICATION

(12)

(21) Application number: **82301120.0**

(22) Date of filing: **05.03.82**

(51) Int. Cl.³: **B 60 G 15/12**
**B 60 G 17/04, F 16 F 9/08**
**F 16 F 9/34**

(30) Priority: **09.03.81 GB 8107262**

(43) Date of publication of application:
**15.09.82 Bulletin 82/37**

(84) Designated Contracting States:
**BE DE FR GB IT**

(71) Applicant: **ARMSTRONG PATENTS CO. LIMITED**
**Gibson Lane Melton**
**North Ferriby North Humberside, HU14 3HY(GB)**

(72) Inventor: **Poyser, John**
**10 Landsdown Way**
**Haxby York(GB)**

(74) Representative: **Stringer, David Hiram et al,**
**W.P. THOMPSON & CO Coopers Building Church Street**
**Liverpool L1 3AB(GB)**

(54) **Improvements relating to hydropneumatic suspension units.**

(57) The present specification relates to a telescopic hydropneumatic suspension unit comprising a body member (10) connectible to one of the sprung and unsprung masses of a vehicle and provided with an internal hydraulic cylinder (12) wherein a piston (16) is reciprocable, a piston rod (18) connected to the piston (16) being connectible to the other of said masses. Flexible diaphragm means (40) co-operate with the body member (10) and said hydraulic cylinder (12), to define both a hydraulic chamber (48) and a pneumatic chamber (50). The end of the piston rod (18) within the hydraulic cylinder (12) is axially bored to act as a pump chamber (74), and engages over an axially apertured pump rod (72) secured axially in said cylinder (12), the pump chamber (74) communicating with a hydropneumatic chamber (38) through suitably arranged valves (80,86; 108,110). Thus relative axial movement between the hydraulic piston rod (18) and the pump rod (72) is effective to transfer hydraulic fluid from the hydropneumatic chamber (38) to the hydraulic chamber (48) with consequent effect upon the axial position of the hydraulic piston rod (18) in its cylinder (12). However, such a construction has required accurate machining of various parts and the use of certain complex components.

The present invention provides a hydropneumatic suspension unit as described hereinabove, which avoids the necessity for the extremely accurate machining of certain parts, by the provision of a fluid flow passage in the form of a groove (96) in the outer surface of the pump rod (72). The groove (96) communicates with the pump chamber (74) in the piston rod (18) and co-operates with a pump rod seal (106) carried by the hydraulic piston (16) or its piston rod (18), to thus permit fluid transfer to the pump chamber (74) from the hydraulic cylinder (12) whenever the pump rod seal (106) is moved by the hydraulic piston (16) to a position wherein an end of said groove (96) is opened to the high pressure end (58) of the hydraulic cylinder (12). By the use of a seal (106) and groove (96), the unit is able to function as required without the necessity for accurately machined equivalent components.

_F I G.1_

i.

DESCRIPTION

"IMPROVEMENTS RELATING TO HYDROPNEUMATIC
SUSPENSION UNITS"

The present invention relates to a hydropneumatic suspension unit for use in vehicle suspension units.

In general, in a hydropneumatic suspension unit, the load exerted on a volume of hydraulic medium by a piston rod displaceable responsive to movement of a mass supported thereby is balanced by a pressurised gaseous medium thus constituting a pneumatic suspension spring. For appliction to vehicle wheel suspension, such units are desirably of a telescopic construction and include levelling means for maintaining the vehicle at a mean riding height irrespective of the changing ride conditions which the vehicle may experience from time to time.

In one type of vehicle telescopic hydropneumatic suspension unit, hereinafter referred to as being a suspension unit of the type described, the unit comprises a body member connectible to one of the sprung or unsprung masses of a vehicle and provided with an internal hydraulic cylinder wherein a piston is reciprocable, a piston rod connected to tne piston being connectible to the other of said masses, flexible diaphragm means co-operating with the body member and the hydraulic cylinder to define both a hydraulic chamber which communicates with the hydraulic cylinder, and a pneumatic chamber, the end of the piston rod within the hydraulic cylinder being axially bored to act as a pump chamber, and both engaging over an axially apertured pump rod secured axially in said cylinder and communicating with a hydropneumatic chamber through suitably arranged pump inlet and delivery valves, whereby relative axial movement between the

2.

hydraulic piston rod and the pump rod is effective to transfer hydraulic fluid from the hydropneumatic chamber to the hydraulic chamber with consequent effect upon the axial position of the hydraulic piston rod in its cylinder.

The invention seeks to provide a hydropneumatic suspension unit of the type described which is economic in manufacture, both by avoiding unnecessary and unnecessarily complex components and by eliminating close manufacturing tolerances in some major components; and which by reason of the simplifications thus achieved, is reliable and durable in service.

British Patent Specification Nos. 933 358 and 1 194 243 each disclose hydropneumatic suspension units similar to the type to which the present invention relates. However, as these prior constructions require the accurate machining of virtually all their respective pump parts, and certain complex components are utilised, their respective constructions are expensive to manufacture.

According to one feature of the present invention, in a hydropneumatic suspension unit of the type described, a fluid flow passage is arranged externally of the pump rod to communicate with the pump chamber in the hydraulic piston rod and co-operates at one end with a pump rod seal carried by said hydraulic piston or its piston rod to permit fluid transfer to the pump chamber from the high pressure in the hydraulic cylinder whenever said pump rod seal is moved by the hydraulic piston to a position wherein said end of said fluid flow passage is opened to said high pressure of said hydraulic cylinder.

The fluid flow passage is preferably a groove, which may be an axially directed or a helical groove,

3.

formed externally in the pump rod and, by its co-operation with the pump rod seal, provides a very simple and reliable means of sensing or detecting the axial position of the hydraulic piston within its cylinder and of maintaining the piston substantially in that position by balancing the rate of fluid delivery to the high pressure in the cylinder space by the pump against the rate of fluid transfer from that high pressure space through the groove to the pump chamber and through the control valve to the supply chamber. Although, for this purpose, the fluid flow passage may have a constant cross-sectional shape, that shape may be varied along the length of the passage in order to vary the rate of fluid transfer between the high and low pressure spaces according to the axial position of the hydraulic piston, thus the pressure acting on the piston rod forces it outwards and away from its mean position in the hydraulic cylinder and to be predetermined and controlled as desired.

According to another feature of the invention, in a hydropneumatic suspension unit of the type described, the pump rod is provided with valve-controlled port means by which the low pressure space is enabled to communicate with the pump chamber, the control valve of said port means then not only acting as a pump inlet valve but also co-operating with the fluid flow passage in the pump rod to affect the axial position of the hydraulic piston in its cylinder. Thus, by appropriately balancing the rate of fluid transfer permitted by the fluid flow passage and by said control valve against the pump delivery rate to the high pressure space in the hydraulic cylinder, the piston rod may as a nett result be caused to move outwardly of the cylinder to extend the length of the suspension unit to compensate for or to control current vehicle riding conditions.

Preferably, the hydraulic cylinder is mounted in an outer body member and an annular space between the two is divided by a separator member into a pair of adjoining compartments, one or both of which in turn is divided into a hydraulic chamber circumscribing the hydraulic pressure cylinder and a contiguous pneumatic chamber, the latter division being by the aforementioned flexible diaphragm means. The function of one or both pneumatic chambers may be performed by external accumulators connected hydraulically.

The present invention will now be further described, by way of example, with reference to the accompanying drawings, in which:-

Fig.1 is an axial section through one embodiment of the present invention;

Fig.2 is an axial section of part of a modified form of the Fig.1 embodiment;

Fig.3 is an axial section through a modified valve suitable for use in the embodiment of Fig.1;

Fig.4 shows a modified bearing seal for use in the embodiment of Fig.1; and

Fig.5 shows a cross sectional view of part of a modified hydraulic piston suitable for use in the embodiment of Fig.1.

In the suspension unit shown in the drawings, a hydraulic piston 16 carried at one end of a piston rod 18 is axially displaceable within a hydraulic cylinder 12 which is arranged coaxially within a cylindrical body member 10. The hydraulic cylinder 12 is mounted between the closed end of the body member 10 in front of the piston 16, and a piston rod guide member 22 closing the opposite end of the body member 10, the latter being externally threaded to receive a flanged retainer nut 24 by which the hydraulic cylinder is clamped between the rod guide 22 and the closed end of the body.

5.

The end of the piston rod remote from the piston 16 extends out of the body member 10 through the guide member 22 which carries a rod bearing 26 together with a fluid seal 30 and a dirt excluding seal 32. The illustrated suspension unit being intended for use in a vehicle wheel suspension system, the end region of the body member 10 adjacent cylinder end seal 44 is adapted in any convenient conventional manner for connection to a vehicle frame while the free end of the piston rod 18 is similarly adapted for connection to a vehicle wheel mounting.

Intermediate the ends of the hydraulic cylinder 12 there is located a separator member 42 which divides the annular space defined between the cylinder 12 and the body member 10 into a pair of adjoining compartments 36 and 38. The axial position of the separator 42 relative to cylinder 12 is determined by a cylindrical spacer 34 which defines the inner wall of the low pressure compartment. A frusto-conical, flexible diaphragm 40 clamped at one end between the body member 10 and the rod guide 22 then further divides the compartment 36 into a hydraulic chamber 48 and a contiguous pneumatic chamber 50, the inner end of the diaphragm being clamped between the separator 42 and the cylindrical spacer 34. A dual seal arrangement comprising two 'O' rings 104 ensures isolation of gas in chamber 50 from oil in chamber 38 and by an Armstrong patented feature in the groove of one seal enables gas to be introduced into chamber 50 under pressure. The diaphragm is conveniently made of an elastomeric material such as a natural or synthetic rubber.

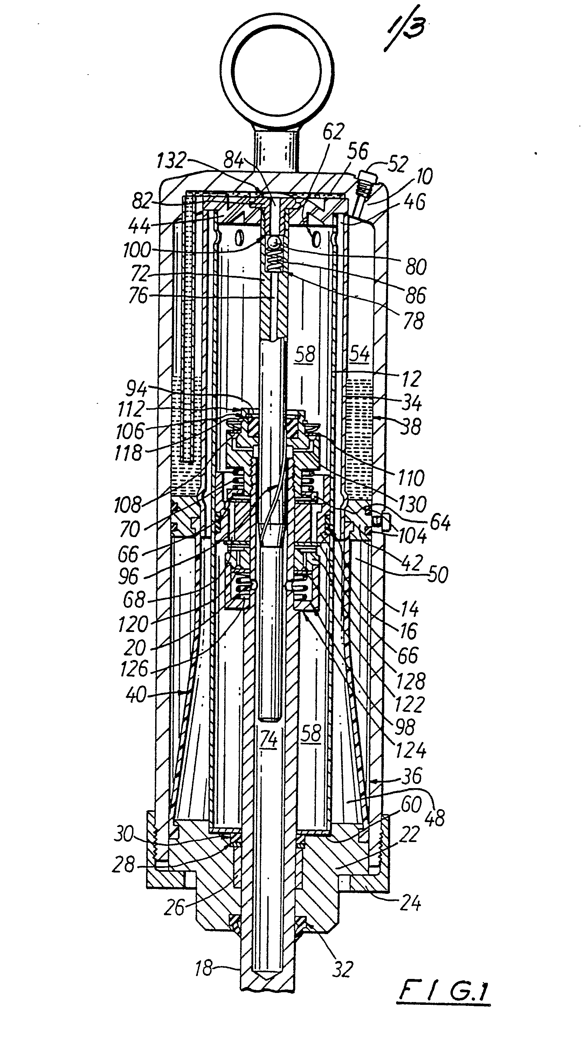

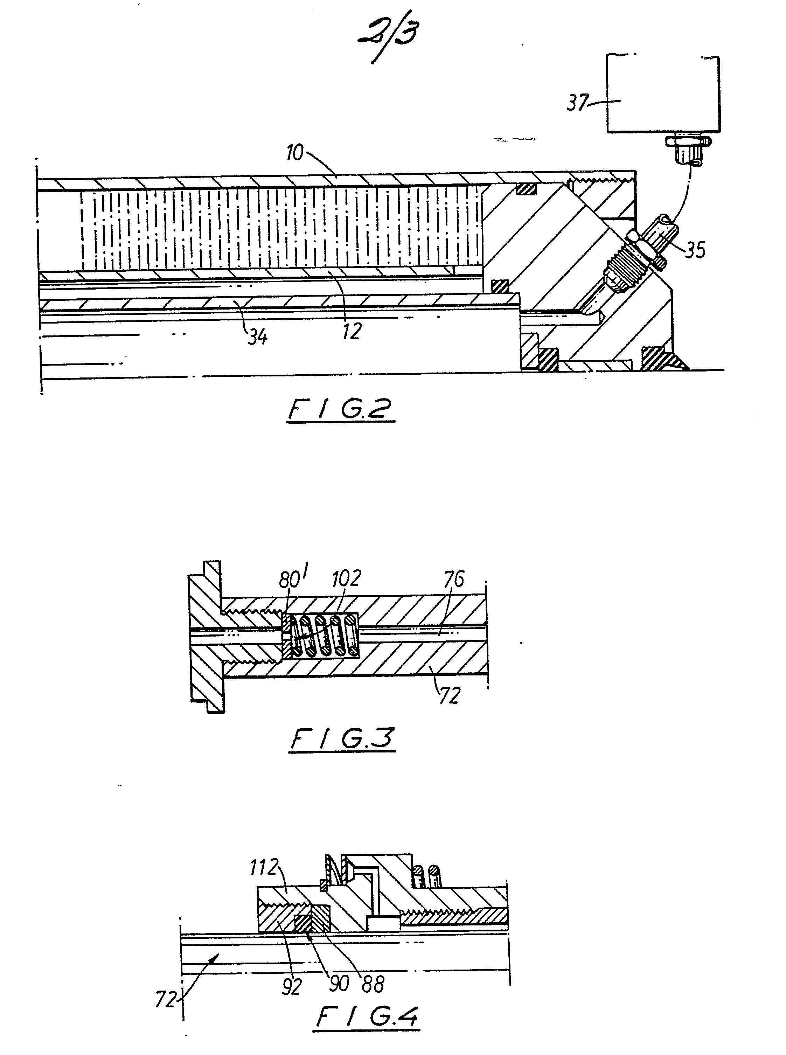

In an alternative construction shown in Fig.2, the space between the hydraulic cylinder 12 and the body member 10 is one chamber and is equivalent to chamber 38 in Fig.1. An external accumulator 37 is connected hydraulically to perform the function of chamber 36.

6.

The connection 35, although shown in Fig.2 at the rod guide end of body member 10 may alternatively be at the closed end of the body member 10.

Referring back to the embodiment of Fig.1, the cylinder space 58 communicates with the hydraulic chamber 48 through passageways 62 formed in hydraulic cylinder 12 and the annulus 46 formed between the hydraulic cylinder 12 and the spacer 34. Construction of the piston 16 and associated valves is conventional and well known in the art of shock absorber manufacture.

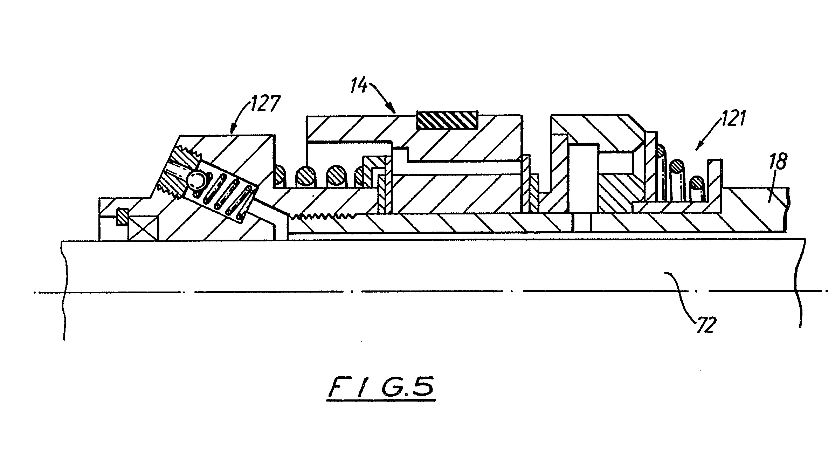

The piston rod 18 is axially bored to provide a pump chamber 74, into which extends a similarly bored pump rod 72 having its end external to the pump chamber flanged and secured within the end seal 44. The flange on the pump rod may be a separate part, fixed to the rod as shown by a thread or similar means. The flanged end of the pump rod is counterbored at 78 to receive a pump delivery valve member 80, a valve seat 82, and spring 86. The free inner end of the pump rod 72 is preferably of reduced diameter so that the effectiveness of the pump is determined by the reduction in diameter. Between the reduced diameter and the normal diameter at the fixed end some taper may be introduced. The degree and position of such a taper being determined to work in conjunction with a groove 96 on the outside of the pump rod 72. The hydraulic piston 16 is secured on piston rod 18 by a valve seat member 112 which is recessed to receive a composite, unitary construction bearing seal 106 which is retained in valve seat member 112 by a circlip 94. Retaining means other than circlip 94 can of course be substituted and also, as shown in Fig.4, the bearing seal 106 can be replaced by a bearing 88 and a separate radially inwardly directed pump rod seal 90 clamped in the valve seat 112 by a ring nut 92.

It will be noted that the mounting of the pump rod 72 within the resilient cylinder end seal 44 enables the rod to be self-centering in the pump chamber 74, and the provision of spherical seat 132 allows for angular misalignment, thus avoiding the need for close manufacturing tolerances in any of these components or in the mounting of the hydraulic piston rod 18.

The exterior of the pump rod 72 is formed with a groove 96 which extends from a position intermediate the ends of the pump rod to terminate adjacent the inner ends of the pump rod. The groove 96 increases gradually in depth in a direction towards the inner end of the pump rod 72 and although it is illustrated as being of helical shape, it may alternatively be an axial parallel groove. The groove 96 serves to place the hydraulic cylinder space 58 in communication with the pump chamber 74 in dependence upon the axial postion of the hydraulic piston rod 18 relative to the hydraulic cylinder 12, that communication first being permitted when the leading end of the groove is uncovered by the pump rod seal 106 and the permitted rate of fluid transfer to the chamber 74 increasing as the seal moves along the groove.

The valve seat 82 is formed with a bleed notch or notches 100 which control the rate of fluid flowing from the chamber 74, and in conjunction with the groove 96 control the transfer of fluid from high pressure space 58 to the low pressure space 38. An alternative construction for the valve member 80 and valve seat 82 is shown in Fig.3 where the ball valve member 80 is replaced by a planar member 80' with a bleed hole 102, obviating the necessity for notches 100.

The rear axial end face of the piston 16 is supported by a ported valve seat member 128 and housing 124. The housing 124 contains a valve plate 120 and spring 126 which urges said plate onto the valve seat 128. The force exerted by the spring 126 determines the pressure at which the plate 120 can be lifted from the seat 128 thereby limiting the pressure in space 58. Under operation fluid passes via ports 122 in the valve seat 128 to the chamber 98 and thence into the pump chamber 74 through ports 20 in the piston rod 18.

Valve 120,128 operates as a pressure relief valve on the rear face of the hydraulic piston 14, and a pump outlet valve comprising valve plate 110 and port 108 allows communication between the pump chamber 74 and the hydraulic cylinder 58 in front of the piston 14. As shown in Fig.5, the respective positions of the pressure relief valve and the pump outlet valve 121 can, if desired, be reversed, so that the pump chamber 74 can communicate with the hydraulic cylinder 58 to the rear of piston 14, whilst the pressure relief valve 127 vents the hydraulic cylinder in front of piston 14.

In use, pressurised gas such as nitrogen is admitted to the pneumatic chambers 54 and 50 through respective filling valves 52 whilst the hydraulic chamber 48 together with the hydraulic cylinder 12 and the pump assembly are filled and the chamber 38 is partially filled with oil. In its installed position, as illustrated, the hydraulic piston 16 is approx. in the middle of the cylinder 12 with the pump rod seal 106 just behind the beginning of the groove 96 which constitutes the level control position wherein the vehicle will be at normal riding height. Under these conditions, the unit will take some share of the suspension load due to the fluid pressure acting on an area equal to the cross-sectional area of the piston rod 18.

When the vehicle is in motion, the piston rod 18 will reciprocate within the hydraulic cylinder 12. As

9.

a result, whenever the pump rod 72 moves further into the pump chamber 74, oil in the chamber 74 is pressurised and passes through communication groove 130 to the port 108 to unseat the valve plate 110, and passes to the hydraulic cylinder space 58. This displacement of fluid compresses the gas in the pneumatic chamber 50 and increases the oil pressure acting on the piston rod 18. During movements of the pump rod 72 in the opposite direction, the pressure in the pump chamber 74 falls and hydraulic fluid from the hydraulic chamber 38 is drawn through the annulus 46 to the valve assembly 80 to 86 and passes by way of bore 76 in the pump rod 72 to the pump chamber 74. Hydraulic fluid also passes to the pump chamber 74 through the control groove 96 whenever this is exposed in front of the pump rod seal 106, the ratio of the fluid transfer rate from the two sources being governed by the position of the hydraulic piston 16 (which determines the exposed length of the grooves 96 and hence the effective cross-sectional area of the groove), the prevailing pressure in the hydraulic cylinder space 58, the velocity of the piston displacement and, when the pump rod 72 is tapered, by the effectiveness of the pump rod 72 within the pump chamber 74.

The parameters of the control groove 96, the control valve assembly 80 to 86 or 102 and the taper of the rod 72 are chosen such that, under expected normal conditions of vehicle load and of road surface, equilibrium is maintained in the fluid transfer from the pump to the hydraulic high pressure regions 58, 48 and from the latter to the low pressure regions 38, 54, the hydraulic piston 16 remaining, under such conditions, with the seal 106 positioned to just expose the leading end of the groove 96, which thus acts as a level sensing indicator. If the load being carried by the vehicle

10.

exceeds the expected normal value, the hydraulic piston 16 moves further into the cylinder 12 so that the leading end of the groove 96 is covered. The pump, however, continues to pump fluid into the high pressure chamber 48 and the cylinder space 58, until the resulting pressure increase again causes the piston rod 18 to move outwardly to the point where the leading end of the groove 96 is once more uncovered and equilibrium, albeit at a higher pressure, is re-established.

When the vehicle is travelling over rough roads or terrain, the rapidity of movement of the piston rod 18 causes the pump to transfer fluid to the high pressure chamber 48 and cylinder space 58 at a faster rate than the control groove 96 is capable of transferring fluid to the chamber 74. The volume of fluid present in the cylinder space thus increases and gives rise to a corresponding increase in the prevailing riding height of the vehicle, the increase in riding height being determined by the speed at which the vehicle is being driven.

The fluid transfer rates which the seal 106 and the control groove 96 are required to handle can, of course, be changed in discrete steps by changing the parameters of the control valve assembly 80 to 86, or 102, and the taper of the rod 72, and for this reason the fluid control valve assembly in each suspension unit is provided to meet the individual service requirement expected of the vehicle to which the unit is to be fitted. Although in the illustrated embodiemnt the control valve is shown as a ball valve or alternatively a plate valve, a spring-loaded seat may be substituted for the fixed seat 82 the spring load being determined to control the rate of fluid flow in conjunction with the control groove 96 and any taper which may be provided on the pump rod 72.

11.

CLAIMS

1. A telescopic hydropneumatic suspension unit comprising a body member (10) connectible to one of the sprung and unsprung masses of a vehicle and provided with an internal hydraulic cylinder (12) wherein a piston (16) is reciprocable, a piston rod (18) connected to the piston (16) being connectible to the other of said masses, flexible diaphragm means (40) co-operating with the body member (10) and said hydraulic cylinder (12) to define both a hydraulic chamber (48) which communicates with said hydraulic cylinder (12), and a pneumatic chamber (50), the end of the piston rod (18) within the hydraulic cylinder (12) being axially bored to act as a pump chamber (74), and both engaging over an axially apertured pump rod (72) secured axially in said cylinder (12) and communicating with a hydropneumatic chamber (38) through suitably arranged pump inlet (80, 82) and delivery (108,110) valves, whereby relative axial movement between the hydraulic piston rod (18) and the pump rod (72) is effective to transfer hydraulic fluid from the hydropneumatic chamber (38) to the hydraulic chamber (48) with consequent effect upon the axial position of the hydraulic piston rod (18) in its cylinder (12), characterised in that a fluid flow passage (96) is arranged externally of the pump rod (72) to communicate with said pump chamber (74) in said piston rod, said fluid flow passage (96) co-operating with a pump rod seal (106) carried by said hydraulic piston (16) or its piston rod (18), to permit fluid transfer to the said pump chamber (74) from the hydraulic cylinder, whenever said pump rod seal (106) is moved by the hydraulic piston (16) to a position wherein said end of said fluid flow passage (96) is opened to said high pressure end (58) of said hydraulic cylinder (12).

12.

2. A suspension unit as claimed in claim 1, in which the fluid flow passage (96) is helical.

3. A suspension unit as claimed in claim 1, in which the fluid flow passage (96) is straight.

4. A suspension unit as claimed in any one of claims 1 to 3, in which the fluid flow passage (96) is in the form of a groove in the outer surface of the pump rod (72).

5. A suspension unit as claimed in any one of claims 1 to 4, in which the transverse cross-section of the fluid flow passage (96) varies along the length of the fluid flow passage (96).

6. A suspension unit as claimed in any one of the preceding claims, in which the hydraulic chamber (48) and pneumatic chamber (50) are provided in a hydropneumatic chamber (37) arranged externally of the unit and connected thereto by connection means (35).

7. A suspension unit as claimed in any one of the preceding claims, in which the valve (80) is a ball valve (80,82) with a bleed groove (100) to allow for controlled fluid flow to the hydropneumatic chamber (38) when the valve (80,82) is closed.

8. A suspension unit as claimed in any one of the preceding claims, in which the valve (80') comprises a spring loaded valve plate (80') with a metering hole (102) provided therein.

9. A suspension unit as claimed in any one of the preceding claims, in which the pump rod (72) is tapered for at least part of its length.

10. A suspension unit as claimed in any one of the preceding claims, in which the pump rod (72) can move laterally or pivot, whilst being axially secured in the hydraulic cylinder (12).

11.  A suspension unit as claimed in any one of the preceding claims, in which the piston (16) has an overload valve (120,128) and an outlet valve (108,110).

FIG.1

F I G.2

F I G.3

F I G.4

*F I G.5*